## Europäisches Patentamt
## European Patent Office
## Office européen des brevets

(19)

(11) Veröffentlichungsnummer: **0 126 853**
**B1**

(12) # EUROPÄISCHE PATENTSCHRIFT

(45) Veröffentlichungstag der Patentschrift:
**22.07.87**

(51) Int. Cl.⁴: **B 27 G 3/00,** B 27 C 5/10

(21) Anmeldenummer: **84102063.9**

(22) Anmeldetag: **28.02.84**

(54) Oberfräse mit Staubabsaugung.

(30) Priorität: **21.04.83 DE 3314419**

(43) Veröffentlichungstag der Anmeldung:
**05.12.84 Patentblatt 84/49**

(45) Bekanntmachung des Hinweises auf die Patenterteilung:
**22.07.87 Patentblatt 87/30**

(84) Benannte Vertragsstaaten:
**AT CH FR GB IT LI SE**

(56) Entgegenhaltungen:
DE-A-2 943 001
DE-A-2 943 185
US-A-2 544 841
US-A-3 167 260
US-A-3 786 846
US-A-3 837 383
US-A-4 088 164

(73) Patentinhaber: **FESTO- Maschinenfabrik Gottlieb Stoll, Ulmer Strasse 48, D-7300 Esslingen (DE)**

(72) Erfinder: **Maier, Peter, Gerokstrasse 1, D-7311 Neidlingen (DE)**
Erfinder: **Attinger, Karl, Seestrasse 21, D-7311 Holzmaden (DE)**
Erfinder: **Sigel, Albert, Scholderplatz 21, D-7315 Weilheim (DE)**
Erfinder: **Hänsel, Gernot, Gerstenstrasse 31, D-7000 Stuttgart 70 (DE)**
Erfinder: **Kutscher, Erwin, Hohenstaufenstrasse 24, D-7333 Ebersbach- Bünzwangen (DE)**
Erfinder: **Walter, Hartmut, Im Saemann 71, D-7050 Waiblingen (DE)**

(74) Vertreter: **Magenbauer, Rudolf, Dipl.- Ing., Patentanwälte Dipl.- Ing. Rudolf Magenbauer Dipl.- Phys. Dr. Otto Reimold Hölderlinweg 58, D-7300 Esslingen (DE)**

## Beschreibung

Die Erfindung betrifft eine Oberfräse mit einem Fräskorb, der ein Antriebsaggregat trägt, an dessen Welle ein Fräser festlegbar ist, mit einem Auflagetisch, der einen den Durchgriff des Fräsers ermöglichenden Durchbruch aufweist und mit einem Sammelraum einer Absaugeinrichtung für die bei der Werkstückbearbeitung anfallenden Späne verbunden ist. Eine solche Oberfräse ist z.B. aus der US-PS 30 22 806 bekannt.

Demgegenüber besteht die Aufgabe der Erfindung darin, bei einer Oberfräse nach dem Gattungsbegriff des Anspruches 1 die Wirksamkeit des Absaugvorgangs zu verbessern.

Die obige Aufgabe wird durch die Merkmale des Anspruches 1 gelöst.

In der folgenden Beschreibung sind Ausführungsbeispiele der Erfindung anhand der Zeichnungen dargestellt. Es zeigen:

Fig. 1 die Seitenansicht einer Oberfräse,

Fig. 2 die Vorderansicht der Oberfräse mit Blick in Richtung II von Fig. 1,

Fig. 3 eine Draufsicht auf die Oberfräse mit Blick in Richtung III von Fig. 1,

Fig. 4 eine Seitenansicht auf einen Gleitanschlag und einen Spänefang der Oberfräse mit Blick in Richtung IV von Fig. 3,

Fig. 5 einen Blick auf die Unterseite der Oberfräse, wobei eine den Auflagetisch verschließende Platte abgenommen ist,

Fig. 6 eine Draufsicht auf einen Auflagetisch der Oberfräse gemäß einer abgewandelten Ausführungsform,

Fig. 7 einen Schnitt durch den Auflagetisch entlang der Linie VII-VII von Fig. 6.

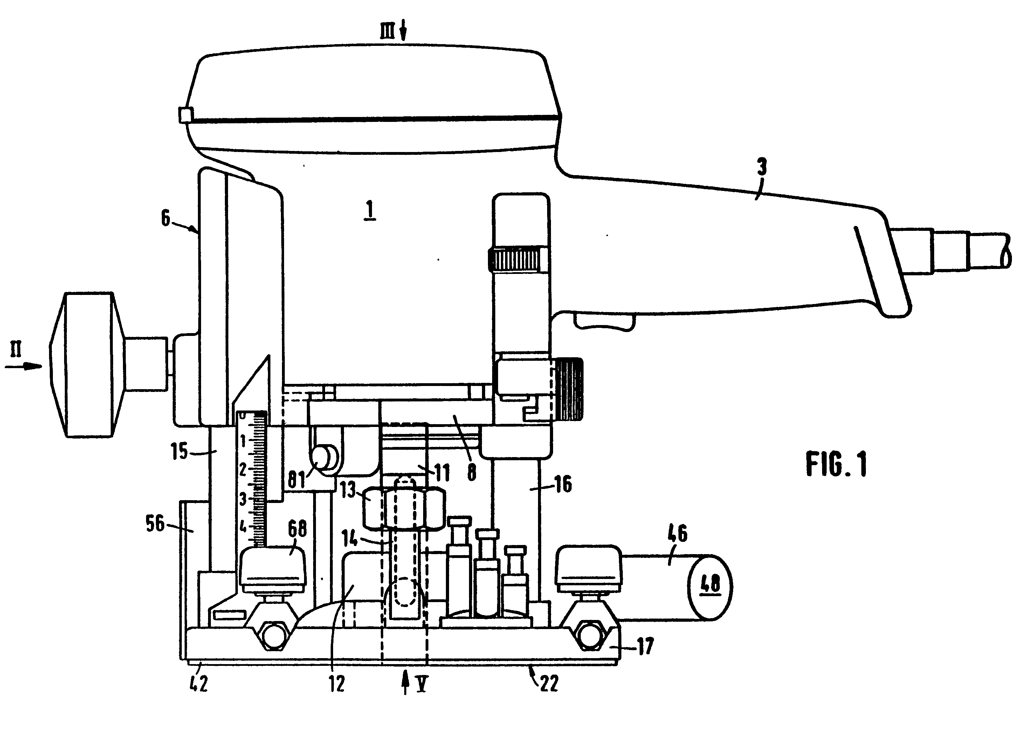

Bezugnehmend zunächst auf Fig. 1, ist eine Oberfräse mit einem Antriebsaggregat 1 dargestellt.

Das Antriebsaggregat wird von einem Fräskorb 6 getragen und steht auf einer Grundplatte 8 des Fräskorbs 6 auf, die mit einer Öffnung versehen ist, durch die eine von dem Antriebsaggregat 1 motorisch gedrehte Welle 11 hindurchragt, an der ein Fräser 12 festgelegt ist.

Mit dem Fräskorb 6 ist über Führungssäulen 15; 16 ein Auflagstisch 17 verbunden, der sich an den Führungssäulen 15; 16 in Achsrichtung des Fräsers 12 bzw. der Welle 11 in der Höhe verstellen läßt.

Der Auflagetisch besitzt einen Durchbruch 21, durch den sich der Fräser 12 hindurchführen läßt.

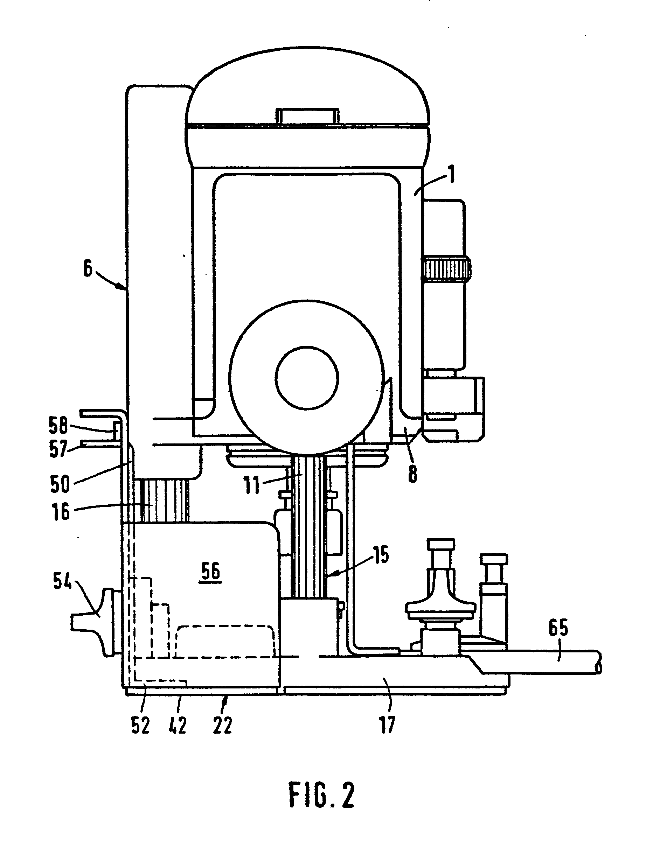

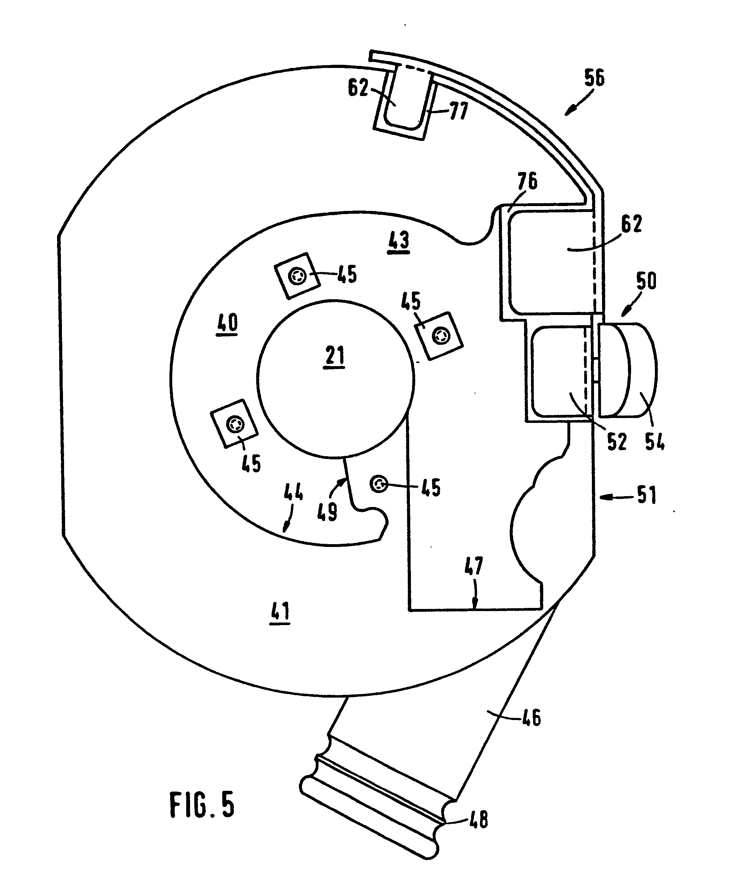

Um die Bedienungsperson vor Frässtaub und unkontrolliert fortfliegenden, größeren Spänen zu schützen, ist vorgesehen, den Auflagetisch 17 als Hohlkörper auszubilden und mit einem Hohlraum 40 zu versehen, der den Durchbruch 21 für den Fräser 12 umgibt und zu diesem Durchbruch 21 hin offen ist. Durch diese Anordnung wird gewährleistet, daß sich Staub und Späne in dem Hohlraum 40 sammeln. Fig. 5 zeigt ein erstes Ausführungsbeispiel eines solchen, als Hohlkörper ausgebildeten Auflagetischs 17. Dieser ist zu seiner Unterseite 41 hin über einen wesentlichen Teil seiner Fläche offen; diese Unterseite 41 wird aber im Betrieb durch eine Platte 42 abgedeckt, die nur im Bereich des Durchbruchs 21 für den Fräser 12 gelocht ist. Die Platte 42 ist in Fig. 1 und 2 ausgewiesen, in Fig. 5 dagegen abgenommen; sie begrenzt zusammen mit einer gegenüberliegenden Deckwand 43 des Auflagetischs 17 sowie einer darin ausgenommenen Ringstufe 44 den Hohlraum 40. Im Innern des Hohlraums 40 sind Befestigungspunkte 45 vorgesehen, an denen die Platte 42 auf dem Hohlkörper des Auflagetischs 17 befestigt wird. Dabei ist eine Schraubverbindung vorgesehen, damit die Platte 42 von Zeit zu Zeit von dem Hohlkörper gelöst und der Hohlraum 40 gegebenenfalls gesäubert werden kann. Die Platte 42 weist zumindest an der Auflageebene 22 des Auflagetischs 17 eine geringe Oberflächenrauhigkeit auf, so daß eine präzise Führung der Oberfräse auf dem zu bearbeitenden Werkstück und ein geringer Reibungswiderstand gewährleistet sind; die Platte 42 kann aus Kunststoff bestehen.

Wie schon erwähnt, hat der Hohlraum 40 die Gestalt eines den Durchbruch 21 umgebenden Ringkanals, in dem sich der von dem rotierenden Fräser 12 tangential weggeschleuderte Frässtaub sammelt. Der Hohlraum 40 kann darüber hinaus mittels eines Saugstutzens 46 an eine Absaugeinrichtung angeschlossen werden. Der Saugstutzen 46 sollte dabei annähernd tangential, d. h. in Wurfrichtung des beim Fräsen anfallenden Abfalls, in den Hohlraum 40 münden. In dem Ausführungsbeispiel gemäß Fig. 5 liegt die Mündung 47 des Saugstutzens 46 im peripheren Bereich des Auflagetischs 17. Ausgehend von dieser Mündung 47, verläuft der Saugstutzen 46 bezogen auf die Längsmittelebene der Oberfräse schräg, und sein zum Anschluß eines Schlauches geeignetes, außen liegendes Mundstück 48 befindet sich unterhalb des Griffs 3 im Längsmittelbereich der Oberfräse. Man erkennt, daß in dieser Anordnung ein tangentialer Anschluß an den Hohlraum 40 erfolgt, wodurch eine hohe Saugleistung erzielt wird. Diese läßt sich noch dadurch steigern, daß man dem Hohlraum 40 die Gestalt einer Schneckenwindung gibt, die den Durchbruch 21 umgibt. Das eine Ende dieser Schneckenwindung wird durch eine Wand 49 des Saugstutzens 46 markiert, die eine direkte Verbindung mit dem Saugstrom sperrt; das andere Ende der Schneckenwindung läuft hingegen unmittelbar in den Saugstutzen 46 aus. Entsprechend der über die Länge der Schneckenwindung anfallenden Staubmenge kann der Querschnitt der Schneckenwindung zum Saugstutzen 46 hin vergrößert werden.

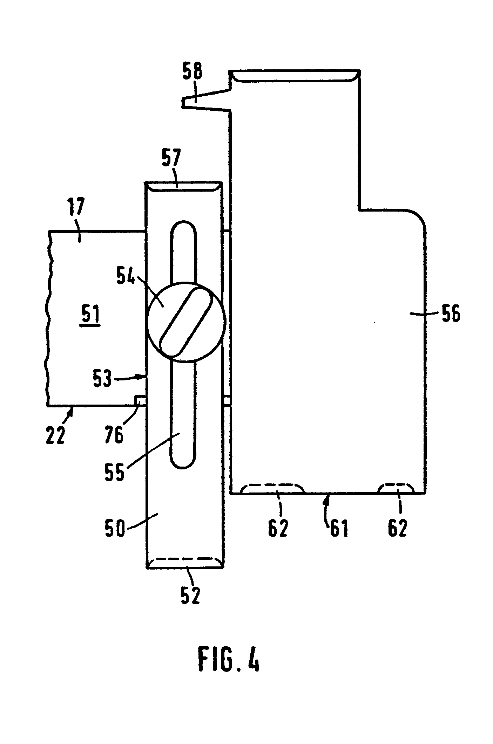

Bezugnehmend nunmehr auf Fig. 2, 3 und 4, wird eine Ausführungsform der Oberfräse beschrieben, die sich in hohem Maße zur Bearbeitung abgestufter Profilstücke, und insbesondere zum Entkitten von Fensterrahmen eignet. Diese Oberfräse besitzt einen zusätzlichen Gleitanschlag 50, der sich gegenüber der Auflageebene 22 des Auflagetischs 17 in einstellbarer Tiefe absenken und arretieren läßt. Dieser Gleitanschlag 50 bildet einen zusätzlichen Stützpunkt beim Fräsen von abgestuften Teilen; während der Auflagetisch 17 auf der einen Seite des Fräsers 12 an der Stufenoberkante des Werkstücks entlanggeführt wird, läuft der Gleitanschlag 50 auf der anderen Seite des Fräsers 12 an der Stufenunterkante. Ersichtlich erreicht man so auch bei abgestuften o. ä. profilierten Werkstücken eine gute Stabilisierung der Oberfräse, und ein Abkippen beim Fräsen wird wirkungsvoll verhindert. Um insbesondere auch in Ecken der Werkstücke fräsen zu können, ist der Gleitanschlag 50 ein schmales, etwa in Höhe des Fräsers 12 an einer Seitenwand 51 des Auflagetischs 17 angeordnetes Winkelstück mit einem Fuß 52, der parallel zur Auflageebene 22 des Auflagetischs 17 abgewinkelt ist. Dieser Fuß 52, mit dem der Gleitanschlag 50 auf dem zu bearbeitenden Werkstück läuft, sollte eine niedrige Oberflächenrauhigkeit aufweisen; er kann daher aus demselben Material bestehen wie die Platte 42, die den Hohlkörper des Auflagetischs 17 abdeckt. Der Fuß 52 ist in Richtung auf den Fräser 12 hin abgewinkelt; diese Anordnung gibt die Möglichkeit, auf der Unterseite 41 des Auflagetischs 17 eine Ausnehmung 76 oder einen Ausschnitt vorzusehen, in die der Fuß 52 paßt. Bei vollständig eingefahrenem Gleitanschlag 50 kommt der Fuß 52 in den Ausschnitt 76 versenkt zu liegen, so daß er sich unterhalb der Auflageebene 22 befindet oder aber mit dieser fluchtet. In dieser Endstellung ist der Gleitanschlag 50 also ohne Wirkung, und die Oberfräse läßt sich wie üblich flächig mit dem Auflagetisch 17 über das zu bearbeitende Werkstück führen.

Das Ausfahren des Gleitanschlags 50 erfolgt in einer Führungsnut 53, die an der Seitenwand 51 des Auflagetischs 17 ausgenommen ist. Entweder der lange Schenkel des den Gleitanschlag 50 bildenden Winkelstücks, oder aber eine an dem Gleitanschlag 50 ausgeformte, zu der Gestalt der Führungsnut 53 komplementäre Führungsrippe greift in die Führungsnut 53 ein und ist darin längsbeweglich gehalten. Zur Arretierung des Gleitanschlags 50 in bestimmten Höhenstellungen dient eine Feststellschraube 54; diese kann durch ein in dem Gleitanschlag 50 ausgenommenes Langloch 55 hindurchragen und auf dem Grund der Führungsnut 53 verschraubbar sein. Das Langloch 55 erlaubt dabei dem Gleitanschlag 50 eine Bewegung zwischen zwei Endlagen, von denen eine der versenkten Stellung des Fußes 52 unter die Auflageebene 22 zugeordnet ist und die andere eine maximale Ausfahrstellung des Gleitanschlags 50 definiert. Nach einem Lösen der Feststellschraube 54 kann der Gleitanschlag 50 in beliebige Zwischenstellungen zwischen diesen Endlagen gebracht und durch ein Anziehen der Feststellschraube 54 arretiert werden.

Beim Fräsen von abgestuften Profilen mit ausgefahrenem Gleitanschlag 50 ist der Arbeitsbereich des Fräsers 12 zum Gleitanschlag 50 hin teilweise offen, so daß Späne und Staub ungehindert nach außen geschleudert werden. Der schmale Gleitanschlag 50 ist kein effektiver Staubfänger; ihn zu diesem Zweck zu verbreitern, verbietet sich aber, weil dadurch ein Fräsen in Ecken hinein behindert würde. Zusätzlich zu dem Gleitanschlag 50 ist ein Spänefang 56 vorgesehen, der den Auflagetisch 17 auf einem größeren Teil seines Umfangs umgreift. Der Spänefang 56 läßt sich bis auf die Tiefe des Gleitanschlags 50 absenken, so daß er als effektiver Fänger von abgeschliffenen Partikeln wirkt; andererseits läßt sich der Spänefang 56 unabhängig von dem Gleitschutz 50 anheben und dadurch aus dem Arbeitsbereich des Fräsers 12 entfernen, wenn dieser in eine Ecke des Werkstücks geführt wird.

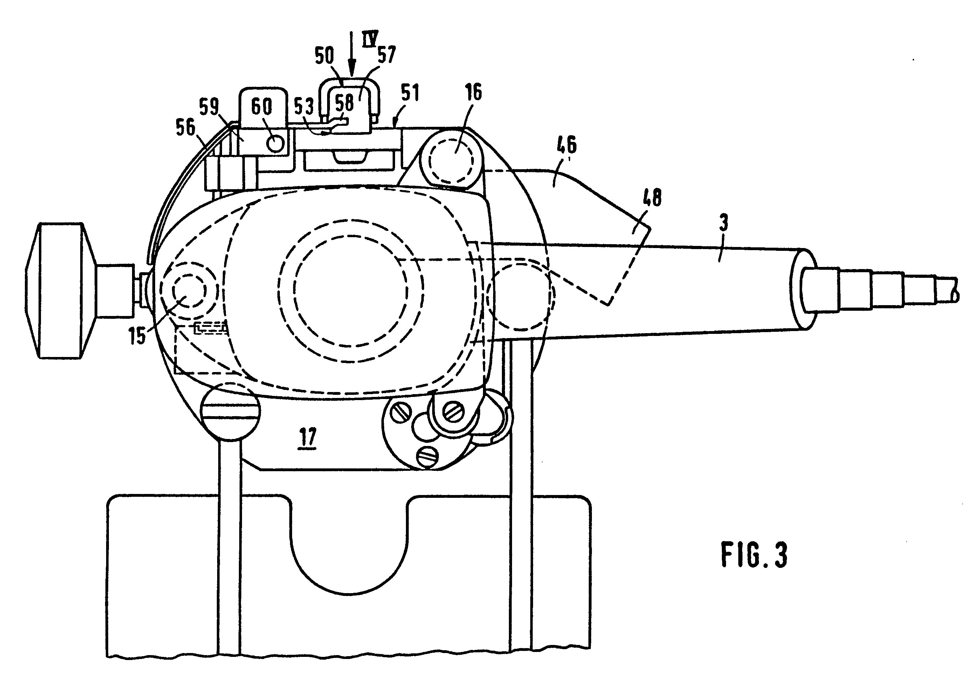

Eine mögliche Anordnung eines solchen Spänefangs 56 zeigen Fig. 3, 4 und 5. Der Spänefang 56 ist demnach ein gekrümmtes Blech, dessen Kontur an die des Auflagetischs 17 angepaßt ist. Der Auflagetisch 17 hat einen rechteckigen Grundriß mit in weitem Bogen abgerundeten Ecken, und der Spänefang 56 nimmt eine Eckpartie des Auflagetischs 17 ein. Er bildet ein um die Eckpartie herum gebogenes Schild, das neben dem Gleitanschlag 50 ansetzt und sich in Vorschubrichtung der Oberfräse bis etwa zu deren Längsmittelebene erstreckt. Ebenso wie der Gleitanschlag 50, läßt sich der Spänefang 56 gegenüber der Auflageebene 22 des Auflagetischs 17 absenken. Die erreichbare Tiefe ist dabei entsprechend der jeweils eingestellten Tiefe des Gleitanschlags 50 begrenzt. Zu diesem Zweck ist am oberen Ende des Gleitanschlags 50 ein Stoß 57 ausgekragt, über den ein an den Spänefang 56 angeformter Zahn 58 ragt. Wird der Spänefang 56 abgesenkt, so läuft der Zahn 58 auf den Stoß 57, sobald die Tiefe des Gleitanschlags 50 erreicht ist; hierdurch wird die Tiefenbegrenzung des Spänefangs 56 gewährleistet. Die Vertikalführung des Spänefangs 56 kann ähnlich wie die des Gleitanschlags 50 gestaltet sein, also aus einer Führungsnut mit darin eingreifender Führungsrippe bestehen (nicht dargestellt). In einer alternativen Anordnung ist der Spänefang 56 mit einem Klotz 59 auf einer Rundstange 60 verschiebbar aufgezogen. Durch geeignete Dimensionierung der Führungsbohrung kann dabei erreicht werden, daß der Klotz 59 allein durch Reibungskräfte in beliebiger Stellung an der Rundstange 60 haftet; auf besondere Arretiermittel für den Spänefang 56 kann in diesem Fall verzichtet werden. In dem dargestellten Ausführungsbeispiel sind auch an der Unterkante 61 des Spänefangs 56 zwei parallel zu der Auflageebene 22 des Auflagetischs 17 abgewinkelte, zu dem Fräser 12 hinweisende Füße 62 angesetzt, die in eingeschobener Stellung des Spänefangs 56 in geeigneten Ausnehmungen 76, 77 des Auflagetischs 17 versenkt zu liegen kommen. Die Füße 62 sind also ganz entsprechend angeordnet wie der Fuß 52 des Gleitanschlags 50; sie dienen dazu, die Führung des Spänefangs 56 dicht über der Oberfläche des zu bearbeitenden Werkstücks zu erleichtern.

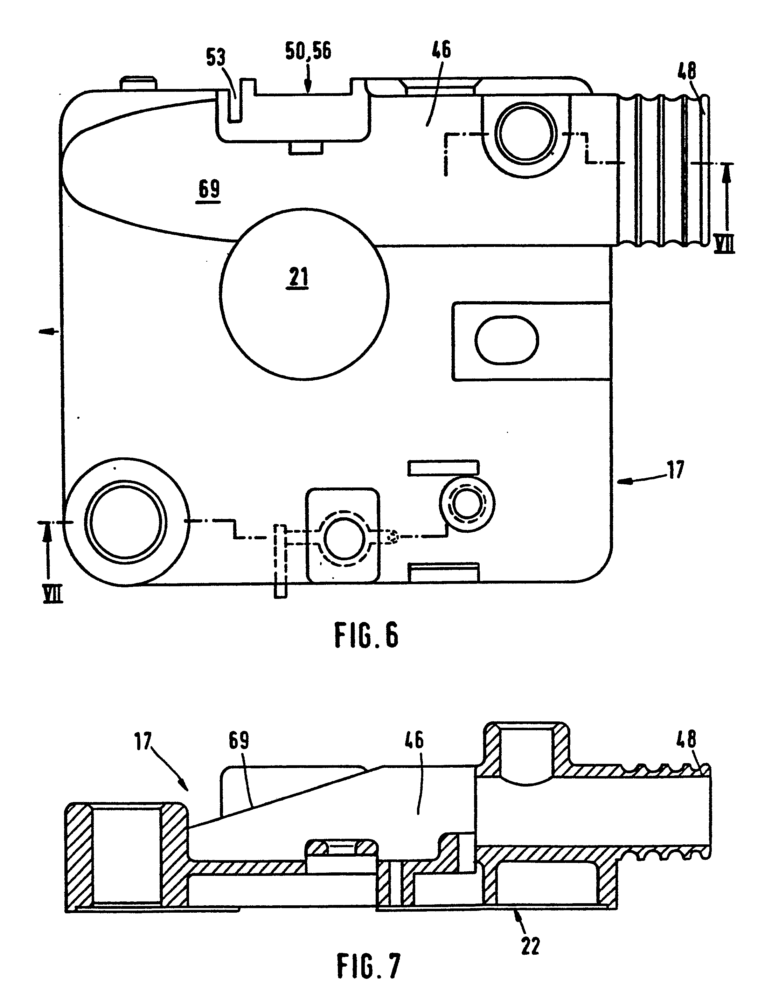

Bezugnehmend nunmehr auf Fig. 6 und 7, ist eine alternative Bauform eines Auflagetischs 17 dargestellt. Übereinstimmende Teile sind dabei mit gleichen Bezugszeichen versehen. Man erkennt zunächst den wiederum mittig angeordneten Durchbruch 21 für den Fräser 12; in dem als Hohlkörper ausgebildeten Auflagetisch 17 ist auch in der Umgebung dieses Durchbruchs 21 ein Hohlraum vorgesehen, in den ein Saugstutzen 46 führt. Der Saugstutzen 46 ist dabei aber nicht schräg, sondern parallel zu der Längsmittelebene der Oberfräse von dem Auflagetisch 17 weggeführt, was im Einzelfall anschlußtechnische Vorteile mit sich bringen kann. Wie man insbesondere Fig. 7 entnimmt, weitet sich der Saugstutzen 46 in einer konischen Partie 69 zu dem Mundstück 48 hin, das zum Anschluß eines Schlauchs geeignet ist.

Im wesentlichen unverändert, erkennt man in Fig. 6 auch eine Führungsnut 53, die die Vertikalbewegung des Gleitanschlags 50 oder des Spänefangs 56 ermöglicht.

**Patentansprüche**

1. Oberfräse mit einem Fräskorb (6), der ein Antriebsaggregat (1) trägt, an dessen Welle ein Fräser (12) festlegbar ist, mit einem Auflagetisch (17), der einen den Durchgriff des Fräsers (12) ermöglichenden Durchbruch (21) aufweist und mit einem Sammelraum (40) einer Absaugeinrichtung (46) für die bei der Werkstückbearbeitung anfallenden Späne verbunden ist, dadurch gekennzeichnet, daß der Sammelraum (10) im Auflagetisch (17) als ein den Durchbruch (21) umgebender, radial innen offener Ringkanal (40) ausgebildet ist, der mit sich vergrößerndem Querschnitt in einen tangential angesetzten Saugstutzen (46) übergeht und von einer seitlich neben dem Bereich des Saugstutzens (46) liegenden Wand (49) unterbrochen ist.

2. Oberfräse nach Anspruch 1, dadurch gekennzeichnet, daß ein Gleitanschlag (50) in senkrechter Richtung zur Auflageebene (22) des Auflagetisches (17) einstellbar angebracht und in der Ausgangsstellung in einer Ausnehmung (76) des Auflagetisches versenkt ist.

3. Oberfräse nach Anspruch 2, dadurch gekennzeichnet, daß neben dem Gleitanschlag (50) ein Spänefang (56) vorgesehen ist, der als um eine Eckpartie des Auflagetisches (17) herumgebogenes Schild ausgebildet ist und in einer Führung geführt ist.

**Claims**

1. A surface milling cutter with a milling cage (6) carrying a drive assembly (1) to the shaft of which a cutter (12) can be fixed, with a supporting table (17) with a hole (21) for the penetration of the cutter (12) and with a collecting chamber (40) of an extraction system (46) for the chips produced during machining connected to said supporting table, wherein the collecting chamber (10) in the supporting table (17) is designed as an annular channel (40) surrounding the hole (21) and radially open towards the inside, the crosssection of said channel enlarging to form a transition section into a tangential extraction piece (46), while the annular channel is broken by a wall (49) arranged at the side of the extraction piece.

2. A surface milling cutter according to Claim 1, wherein a slide stop (50) adjustable vertically to the support plane (22) of the supporting table (17) is provided to be located flush in a recess (76) of the supporting table in the rest position.

3. A surface milling cutter according to Claim 2, wherein a chip catching device (56) is provided adjacent to the slide stop (50), this being designed as a shield curved round a corner section of the supporting table (17) and guided in a guide.

**Revendications**

1. Défonceuse avec une tête porte-fraise (6) qui porte un groupe moteur (1) sur l'arbre duquel peut être fixée une fraise (12), avec un plateau (17) qui présente un ajour (21) permettant le passage de la fraise (12) et qui est relié à une chambre collectrice (40) d'un dispositif d'aspiration (46) pour les copeaux produits lors de l'usinage de la pièce travaillée, caractérisée en ce que la chambre collectrice (10) est conformée dans le plateau (17) en canal annulaire (40) ouvert radialement vers l'intérieur qui entoure l'ajour (21), qui présente une section allant en augmentant pour se raccorder à une tubulure d'aspiration (46) rapportée tangentiellement, et qui est interrompu par une paroi (49) située latéralement à côté de la région de la tubulure d'aspiration (46).

2. Défonceuse selon la revendication 1, caractérisée en ce qu'une butée coulissante (50) est montée réglable dans une direction perpendiculaire au plan d'appui (22) du plateau (17), butée qui à sa position d'origine est enfoncée dans un évidement (76) du plateau.

3. Défonceuse selon la revendication 2, caractérisée en ce qu'il est prévu à côté de la butée coulissante (50) un collecteur de copeaux (56) qui est conformé en bouclier recourbé autour d'une partie de coin du plateau (17), et qui est guidé dans un guide.

FIG. 1

FIG. 2

FIG.3

FIG. 4

FIG. 5

FIG. 6

FIG. 7